# EUROPÄISCHE PATENTANMELDUNG

(11) **EP 2 071 950 A1**
(43) Veröffentlichungstag der Anmeldung: **24.06.2009**
(21) Anmeldenummer: 07024752.3
(22) Anmeldetag: 20.12.2007
(51) Int. Cl.: A01N 25/00, C07B 59/00

(54) **Verfahren zur Authentizitätsprüfung von Pflanzenschutzmitteln mittels Isotopen**

(71) Anmelder: Bayer CropScience AG, 40789 Monheim (DE)
(72) Erfinder: Baur, Peter Prof. Dr., 56938 Schondorf (DE); Pontzen, Rolf Dr., 42799 Leichlingen (DE); Schulz, Friedhelm, 46049 Oberhausen (DE)

(57) **Zusammenfassung**

Ein Verfahren zur Identifizierung eines Pflanzenschutzmittels, wobei
a) man bei einer Referenzprobe eines ersten Pflanzenschutzmittels mindestens ein relatives Verhältnis zwischen zwei stabilen Isotopen eines chemischen Elements bestimmt,
b) man bei einer zweiten Probe eines Pflanzenschutzmittels, dessen Identität mit dem ersten Produkt untersucht werden soll, das gleiche relative Verhältnis zwischen zwei stabilen Isotopen eines chemischen Elements wie in Schritt (a) bestimmt, und
c) man durch Vergleich der in Schritt (a) und (b) ermittelten Werte Identität oder Nichtidentität der beiden Pflanzenschutzmittel feststellt,
erlaubt eine einfache und zuverlässige Authentizitätsprüfung von Pflanzenschutzmitteln.

## Beschreibung

Die Erfindung betrifft ein Verfahren zum Identifizieren von Pflanzenschutzmitteln mittels Isotopen.

Der Handel mit Plagiaten verursacht bei den Herstellern und Vertreibern der Originalerzeugnisse, die häufig durch Patente, Gebrauchs- und Geschmacksmuster, sowie Marken und Urheberrechte geschützt sind, jährlich Schäden in beträchtlicher Höhe. Daneben bedeuten solche Imitate auch ein Risiko für die Endverbraucher, da die Fälschungen zwar die Qualität der Originalerzeugnisse vortäuschen, aber überwiegend nicht aufweisen. Somit besteht daher ein Bedarf an Verfahren, mit denen Originalerzeugnisse, wie z.B. Pflanzenschutzmittel, von Plagiaten einfach, zuverlässig und schnell unterschieden werden können.

Solche Verfahren, mit denen die Identität eines Pflanzenschutzmittels ermittelt werden kann (Authentizitätsprüfung), können aber auch im Bereich der Produkthaftung von großer Bedeutung sein, um bei Reklamationen Herkunft und Zeitpunkt der Herstellung zuverlässig bestimmen zu können.

Die bisherige Verwendung von beispielsweise speziellen Markierungssubstanzen, als Zusatz zu Pflanzenschutzmitteln, ist aber oft aufwendig und bietet nicht immer die gewünschte Sicherheit, da die Markierungssubstanz unter Umständen auch vom Hersteller des Plagiats zugesetzt werden kann.

Zudem handelt es sich bei den verwendeten Markierungssubstanzen häufig um Indikatoren, wie beispielsweise Fluoreszenzfarbstoffe, oder andere Substanzen, die z.B. mit bestimmten Enzymen, Immunglobulinen oder auf andere Weise eine Farbreaktion zeigen (z.B. ELISA-Tests). Die Zusatzkosten für diese Substanzen sind teilweise beträchtlich, da meist entsprechend hohe Mengen an Markierungssubstanz eingesetzt werden müssen, um eine spätere Detektion zu ermöglichen. Empfindlichere, spezifischere Tests benötigen zwar weniger Markierungssubstanz, verursachen aber häufig erhöhten Aufwand und höhere Kosten bei der späteren Analyse.

Weitere Verfahren zur ldentitätsprüfung von Erzeugnissen basieren auf der Bestimmung von Isotopenverhältnissen, wobei entweder das natürliche Verhältnis von stabilen Isotopen eines Erzeugnis bestimmt wird oder bestimmte stabile Isotopen, in an- oder abgereicherter Form dem Erzeugnis zugesetzt werden, wie beispielsweise in US 5 474 937 A, WO 03/014700 A2 oder WO 2006/002608 A1 beschrieben. Die spätere Messung erfolgt dann beispielsweise über spezielle gaschromatographische oder massenspektroskopische Verfahren.

Bei der Untersuchung von Lebensmitteln für die Authentizitätsprüfung wurde beispielsweise auch das natürlich vorkommende 13C/12C-Isotopen-Verhältnis zur Charakterisierung einer Probe massenspektroskopisch als δ13C Wert in Promille (‰) zu bestimmen (J. Winkler und H.-L. Schmidt (1980): Einsatzmöglichkeiten der 13C-Isotopen-Massenspektrometrie in der Lebensmitteluntersuchung; Z. Lebensm. Unters. Forsch. 94, 85-93). Hierbei wurden Unterschiede in der Höhe des 13°C-Gehalts von bis zu 14 ‰ bei Zuckerproben gefunden, anhand derer dann geklärt werden konnte, ob die Zuckerprobe aus Zuckerrüben oder aus Zuckerrohr stammt. Ähnliche Herkunftsuntersuchungen existieren auch für weitere Lebensmittel, wie Fleisch, Eier und Honig, wobei überraschend ist, dass die Unterschiede im Gehalt bestimmter stabiler Isotope ausreichend sind, um auch bei gleichen bzw. sehr ähnlichen Erzeugnissen die Herkunft aus einer bestimmten Produktionsquelle nachzuweisen und somit eine Hersteller-Identifizierung zu ermöglichen.

Im Bereich der Identitätsprüfung von Pflanzenschutzmittel haben Isotopenverfahren allerdings bisher noch nicht die spezielle Würdigung gefunden. So fehlt es einfach an konkreten Anwendungen. Es bestand daher die Aufgabe Verfahren zur Authentizitätsprüfung von Pflanzenschutzmitteln basierend auf Isotopenverfahren bereitzustellen, die weitere, dem Stand der Technik gegenüber vorteilhafte Eigenschaften aufweisen.

So wurde gefunden, dass sich Unterschiede im Gehalt von bestimmten stabilen Isotopen eines Pflanzenschutzmittels zur Bestimmung der Herkunft aus einer bestimmten Produktion und somit zur Identifizierung (Authentizitätsprüfung) nutzen lassen.

Gegenstand der Erfindung ist daher ein Verfahren zur Identifizierung von Pflanzenschutzmitteln, wobei
a) man bei einer Referenzprobe eines ersten Pflanzenschutzmittels mindestens ein relatives Verhältnis zwischen zwei stabilen Isotopen eines chemischen Elements bestimmt,
b) man bei einer zweiten Probe eines Pflanzenschutzmittels, dessen Identität mit dem ersten Produkt untersucht werden soll, das gleiche relative Verhältnis zwischen zwei stabilen Isotopen eines chemischen Elements wie in Schritt (a) bestimmt, und
c) man durch Vergleich der in Schritt (a) und (b) ermittelten Werte Identität oder Nichtidentität der beiden Pflanzenschutzmittel feststellt.

Das erfindungsgemäße Verfahren erlaubt somit eine einfache und zuverlässige Authentizitätsprüfung von Pflanzenschutzmitteln.

Bei den Pflanzenschutzmitteln handelt es sich im allgemeinen um Wirkstoffzusammensetzungen zur Bekämpfung von Schadorganismen.

Insbesondere bevorzugt sind Schädlingsbekämpfungsmittel, d.h. Mittel zur Bekämpfung von pflanzlichen, tierischen und mikrobiellen Schädlingen, wie sie beispielsweise in der Landwirtschaft, in Haus und Garten, im Bereich der gewerblichen Schädlingsbekämpfung, der Tierhaltung, Tiergesundheit und der öffentlichen Hygiene und Gesundheitsvorsorge (Vektorkontrolle) eingesetzt werden.

Solche Mittel enthalten typischerweise ein oder mehrere Wirkstoffe, Lösemittel und/oder Trägerstoffe sowie Hilfsstoffe, die den Aufbau einer stabilen Formulierung ermöglichen, insbesondere Tenside, und Adjuvantien, d.h. Stoffe, welche die Wirkung des Mittels erhöhen, z.B. Netzmittel, Spreizmittel und Penetrationsförderer.

Als Wirkstoffe der genannten Schädlingsbekämpfungsmittel kommen z.B. Herbizide, Insektizide, Fungizide, Safener und Wachstumsregulatoren in Betracht.

Vorzugsweise kommen als Wirkstoffe alle agrochemischen Wirkstoffe in Frage aus der Gruppe der Herbizide und/oder Safener, deren biologische Wirksamkeit gegen Unkäuter im weiteren Sinne, im Folgenden auch als schädliche Pflanzen (Schadpflanzen) bezeichnet, wohingegen Safener Kulturpflanzen schützen bzw. stärken, und/oder aus der Gruppe der Insektizide und Fungizide, deren biologische Wirksamkeit gegen Insekten, Spinnenartige und Nematoden oder Pilze und Bakterien im weiteren Sinne, im Folgenden auch als schädliche Tiere (Schadtiere) und pflanzenpathogene Mikroorganismen (Schadpilze) bezeichnet. Schadpflanzen, Schadtiere und Schadpilze werden im Folgenden auch zusammenfassend als Schadorganismen bezeichnet.

Vorzugsweise genannt seien Wirkstoffe aus der Gruppe der Herbizide, umfassend auch Pflanzenwuchsregulatoren, und Safener; aus der Gruppe der Insektizide, umfassend auch Akarizide, Nematizide, Molluskizide, Rodentizide, Repellents; und aus der Gruppe der Fungizide, umfassend auch Bakterizide und Virizide, sowie Pflanzennährstoffe. Im folgenden beinhaltet der Begriff Herbizide sowohl Herbizide wie auch Pflanzenwuchsregulatoren, der Begriff Insektizide sowohl Insektizide wie auch Akarizide, Nematizide, Molluskizide, Rodentizide und Repellents und der Begriff Fungizide sowohl Fungizide wie auch Bakterizide und Virizide - soweit aus dem Zusammenhang nichts anderes hervorgeht. Beispiele für einzelne agrochemische Wirkstoffe aus den oben genannten Gruppen sind:

### Herbizide

Beispiele für Herbizide sind beispielsweise bekannte Wirkstoffe, die auf einer Inhibition von beispielsweise Acetolactat-Synthase, Acetyl-Coenzym-A-Carboxylase, PS I, PS II, HPPDO, Phytoene-Desaturase, Protoporphyrinogen-Oxidase, Glutamine-Synthetase, Cellulosebiosynthese, 5-Enolpyruvylshikimat-3-phosphat-Synthetase beruhen, einsetzbar. Solche Verbindungen und auch andere einsetzbare Verbindungen mit teilweise unbekanntem oder anderem Wirkungsmechanismus sind z.B. in Weed Research 26, 441-445 (1986), oder in dem Handbuch "The Pesticide Manual", 12. Auflage 2000, oder 13. Auflage 2003 oder 14. Auflage 2006/2007, oder in dem entsprechenden "e-Pesticide Manual", Version 4 (2006), jeweils herausgegeben vom British Crop Protection Council, (im Folgenden auch kurz "PM"), und dort zitierter Literatur beschrieben. Listen von "Common names" sind auch in "The Compendium of Pesticide Common Names" im Internet verfügbar. Als literaturbekannte Herbizide, die mit den Verbindungen der Formel (I) kombiniert werden können, sind z.B. folgende Wirkstoffe zu nennen (Anmerkung: Die Verbindungen, Herbizide wie Safener, sind entweder mit dem "common name" nach der International Organization for Standardization (ISO) oder mit dem chemischen Namen, ggf. zusammen mit einer üblichen Codenummer bezeichnet):
acetochlor; acibenzolar-S-methyl; acifluorfen(-sodium); aclonifen; AD-67; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim(-sodium); ametryn; amicarbazone, amidochlor, amidosulfuron; aminopyralid; amitrol; AMS, d.h. Ammoniumsulfamat; ancimidol; anilofos; asulam; atrazin; aviglycine; azafenidin, azimsulfuron (DPX-A8947); aziprotryn; barban; BAS 516 H, d.h. 5-Fluor-2-phenyl-4H-3,1-benzoxazin-4-on; beflubutamid, benazolin(-ethyl); bencarbzone; benfluralin; benfuresate; benoxacor; bensulfuron(-methyl); bensulide; bentazone; benzfendizone; benzobicyclon, benzofenap; benzofluor; benzoylprop(-ethyl); benzthiazuron; bialaphos; bifenox; bispyribac(-sodium), borax; bromacil; bromobutide; bromofenoxim; bromoxynil(-octanoat); bromuron; buminafos; busoxinone; butachlor; butafenacil, butamifos; butenachlor; buthidazole; butralin; butroxydim, butylate; cafenstrole (CH-900); carbetamide; carfentrazone(-ethyl); caloxydim, CDAA, d.h. 2-Chlor-N,N-di-2-propenylacetamid; CDEC, d.h. Diethyldithiocarbaminsäure-2-chlorallylester; chlomethoxyfen; chloramben; chlorazifop-butyl, chlorbromuron; chlorbufam; chlorfenac; chlorfenprop; chlorflurecol(-methyl); chlorflurenol(-methyl); chloridazon; chlorimuron(-ethyl); chlormequat(-chloride); chlormesulon (ICI-A0051); chlornitrofen; chlorotoluron; chloroxuron; chlorpropham; chlorsulfuron; chlorthal-dimethyl; chlorthiamid; chlortoluron, cinidon(-methyl und -ethyl), cinmethylin; cinosulfuron; clefoxydim, clethodim; clodinafop und dessen Esterderivate (z.B. clodinafop-propargyl); clofencet; clomazone; clomeprop; cloproxydim; clopyralid; clopyrasulfuron(-methyl), cloquintocet(-mexyl); cloransulam(-methyl), cumyluron (JC 940); cyanamide; cyanazine; cycloate; cyclosulfamuron (AC 104); cycloxydim; cycluron; cyhalofop und dessen Esterderivate (z.B. Butylester, DEH-112); cyperquat; cyprazine; cyprazole; cyprosulfamide; daimuron; 2,4-D, 2,4-DB; dalapon; daminozide; dazomet; n-decanol; desmedipham; desmetryn; di-allate; dicamba; dichlobenil; dichlormid; dichlorprop(-P)-salze; diclofop und dessen Ester wie diclofop-methyl; diclofop-P(-methyl); diclosulam, diethatyl(-ethyl); difenoxuron; difenzoquat(-metilsulfate); diflufenican; diflufenzopyr, dimefuron; dimepiperate, dimethachlor; dimethametryn; dimethazone; dimethenamid (SAN-582H); dimethenamide-P; dimethylarsinic acid; dimexyflam, dimethipin; dimetrasulfuron, dinitramine; dinoseb; dinoterb; diphenamid; dipropetryn; diquat-salze; dithiopyr; diuron; DNOC; eglinazine-ethyl; EL 77, d.h. 5-Cyano-1-(1,1-dimethylethyl)-N-methyl-1H-pyrazole-4-carboxamid; endothal; epoprodan, EPTC; esprocarb; ethalfluralin; ethametsulfuron-methyl; ethidimuron; ethiozin; ethofumesate; ethoxyfen und dessen Ester (z.B. Ethylester, HN-252); ethoxysulfuron, etobenzanid (HW 52); F5231, d.h. N-[2-Chlor-4-fluor-5-[4-(3-fluorpropyl)-4,5-dihydro-5-oxo-1H-tetrazol-1-yl]-phenyl]-ethansulfonamid; fenchlorazole(-ethyl); fenclorim; fenoprop; fenoxan, fenoxaprop und fenoxaprop-P sowie deren Ester, z.B. fenoxaprop-P-ethyl und fenoxaprop-ethyl; fenoxydim; fentrazamide, fenuron; ferrous sulfate; flamprop(-methyl oder -isopropyl oder -isopropyl-L); flamprop-M(-methyl oder -isopropyl); flazasulfuron; florasulam, fluazifop und fluazifop-P und deren Ester, z.B. fluazifop-butyl und fluazifop-P-butyl; fluazolate, flucarbazone(-sodium), flucetosulfuron; fluchloralin; flufenacet; flufenpyr(-ethyl); flumetralin; flumetsulam; flumeturon; flumiclorac(-pentyl), flumioxazin (S-482); flumipropyn; fluometuron, fluorochloridone, fluorodifen; fluoroglycofen(-ethyl); flupoxam (KNW-739); flupropacil (UBIC-4243); flupropanoate; flupyrsulfuron(-methyl)(-sodium); flurazole; flurenol(-butyl); fluridone; flurochloridone; fluroxypyr(-meptyl); flurprimidol, flurtamone; fluthiacet(-methyl), fluthiamide, fluxofenim; fomesafen; foramsulfuron, forchlorfenuron; fosamine; furilazole; furyloxyfen; gibberillic acid; glufosinate(-ammonium); glyphosate(-isopropylammonium); halosafen; halosulfuron(-methyl); haloxyfop und dessen Ester; haloxyfop-P (= R-haloxyfop) und dessen Ester; HC-252; hexazinone; imazamethabenz(-methyl); imazamethapyr, imazamox, imazapic, imazapyr; imazaquin und Salze wie das Ammoniumsalz; imazethamethapyr; imazethapyr; imazosulfuron; inabenfide; indanofan; indol-3-acetic acid; 4-indol-3-ylbutyric acid; iodosulfuron-methyl(-sodium); ioxynil(-octanoat); isocarbamid; isopropalin; isoproturon; isouron; isoxaben; isoxachlortole, isoxadifen(-ethyl), isoxaflutole, isoxapyrifop; karbutilate; lactofen; lenacil; linuron; MCPA; MCPB; mecoprop(-P); mefenacet; mefenpyr(-diethyl); mefluidid; mepiquat(-chloride); mesosulfuron(-methyl); mesotrione, metam; metamifop; metamitron; metazachlor; methabenzthiazuron; metham; methazole; methoxyphenone; methylarsonic acid; methyl-cyclopropene; methyldymron; methylisothiocyanate; methabenzthiazuron; metobenzuron; metobromuron; (alpha-)metolachlor; metosulam (XRD 511); metoxuron; metribuzin; metsulfuron-methyl; MH; MK-616; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; naproanilide; napropamide; naptalam; NC 310, d.h. 4-(2,4-dichlorbenzoyl)-1-methyl-5-benzyloxypyrazol; neburon; nicosulfuron; nipyraclofen; nitralin; nitrofen; nitrophenolate mixture; nitrofluorfen; nonanoic acid; norflurazon; orbencarb; orthasulfamuron; oxabetrinil; oryzalin; oxadiargyl (RP-020630); oxadiazon; oxasulfuron, oxaziclomefone, oxyfluorfen; paclobutrazol; paraquat(-dichloride); pebulate; pelargonic acid, pendimethalin; penoxulam; pentachlorophenol; pentanochlor; pentoxazone, perfluidone; pethoxamid; phenisopham; phenmedipham; picloram; picolinafen, pinoxaden, piperophos; piributicarb; pirifenop-butyl; pretilachlor; primisulfuron(-methyl); probenazole; procarbazone-(sodium), procyazine; prodiamine; profluralin; profoxydim; prohexadione(-calcium); prohydrojasmon; proglinazine(-ethyl); prometon; prometryn; propachlor; propanil; propaquizafop; propazine; propham; propisochlor; propoxycarbazone(-sodium); n-propyl-dihydrojasmonate; propyzamide; prosulfalin; prosulfocarb; prosulfuron (CGA-152005); prynachlor; pyraclonil; pyraflufen(-ethyl), pyrasulfotole; pyrazolynate; pyrazon; pyrazosulfuron(-ethyl); pyrazoxyfen; pyribenzoxim, pyributicarb, pyridafol, pyridate; pyriftalid; pyriminobac(-methyl), pyrimisulfan; pyrithiobac(-sodium) (KIH-2031); pyroxasulfone; pyroxofop und dessen Ester (z.B. Propargylester); pyroxulam; quinclorac; quinmerac; quinoclamine, quinofop und dessen Esterderivate, quizalofop und quizalofop-P und deren Esterderivate z.B. quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; sintofen; SN 106279, d.h. 2-[[7-[2-Chlor-4-(trifluor-methyl)-phenoxy]-2-naphthalenyl]-oxy]-propansäure und -methylester; sulcotrione, sulfentrazone (FMC-97285, F-6285); sulfazuron; sulfometuron(-methyl); sulfosate (ICI-A0224); sulfosulfuron, TCA; tebutam (GCP-5544); tebuthiuron; tecnacene; tembotrione; tefuryltrione; tepraloxydim, terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiafluamide, thiazafluron; thiazopyr (Mon-13200); thidiazimin (SN-24085); thiencarbazone(-methyl); thifensulfuron(-methyl); thiobencarb; Ti 35; tiocarbazil; topramezone; tralkoxydim; tri-allate; triasulfuron; triaziflam, triazofenamide; tribenuron(-methyl); triclopyr; tridiphane; trietazine; trifloxysulfuron; trifluralin; triflusulfuron und Ester (z.B. Methylester, DPX-66037); trimeturon; trinexapac; tritosulfuron, tsitodef; uniconazole; vernolate; WL 110547, d.h. 5-Phenoxy-1-[3-(trifluormethyl)-phenyl]-1 H-tetrazol; BAY MKH 6561, UBH-509; D-489; LS 82-556; KPP-300; NC-324; NC-330; KH-218; DPX-N8189; SC-0774; DOWCO-535; DK-8910; V-53482; PP-600; MBH-001; KIH-9201; ET-751; KIH-6127, KIH-2023, KIH-5996 und KIH-485.

Bevorzugt sind von den oben genannten herbiziden Wirkstoffen, Verbindungen aus der Gruppe der "Sulfonamide", vorzugsweise Phenylsulfonamide, wie Phenylsulfonylaminocarbonyltriazolinone oder Phenylsulfonylharnstoffe, Heteroarylsulfonamide und sonstige Sulfonamide wie Cyclosulfamuron oder (Alkylsulfonyl)alkylamino-sulfonamide wie Amidosulfuron, sowie deren Salze. Als Phenylsulfonamide kommen bevorzugt Verbindungen aus der Gruppe der Phenylsulfonylaminocarbonyltriazolinone oder der Phenylsulfonylharnstoffe in Frage. Unter dem Begriff Phenylsulfonylharnstoffe werden auch solche Sulfonylharnstoffe verstanden, bei denen die Phenylgruppe über einen Spacer wie CH₂, O oder NH an die Sulfongruppe (SO₂) gebunden ist. Beispiele für Phenylsulfonylaminocarbonyltriazolinone sind Flucarbazone, Propoxycarbazone oder Methyl-4-[(4,5-dihydro-3-methoxy-4-methyl-5-oxo-1 H-1,2,4-triazol-1-yl)carboxamidosulfonyl]-5-metylthiophen-3-carboxylat (z.B. bekannt aus WO-A-03/026427, Beispiel I-2) und/oder deren Salze. Die Sulfonamide sind kommerziell erhältlich und/oder nach bekannten Verfahren herstellbar wie sie z.B. beschrieben sind in EP-A-7687, EP-A-30138, US 5,057,144 und US 5,534,486.

Als Phenylsulfonamide kommen beispielsweise Phenylsulfonamide der allgemeinen Formel (I) und/oder deren Salze in Frage, 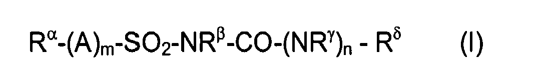 worin
- R^{α}: ein Phenylrest ist, der unsubstituiert oder substituiert ist, und wobei der Phenylrest inklusive Substituenten 6-30 C-Atome, vorzugsweise 6-20 C-Atome aufweist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A: gleich CH₂, O oder NH, vorzugsweise O, ist,
- m: gleich Null oder 1,
- n: gleich Null oder 1, vorzugsweise gleich 1, und
- R^{δ}: ein heterocyclischer Rest wie ein Pyrimidinylrest, ein Triazinylrest oder ein Triazolinonrest ist.

Bevorzugte Phenylsulfonamide sind Phenylsulfonylharnstoffe, beispielsweise Phenylsulfonylharnstoffe der allgemeinen Formel (II) und/oder deren Salze, 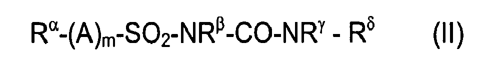 worin
- R^{α}: ein Phenylrest ist, der unsubstituiert oder substituiert ist, und wobei der Phenylrest inklusive Substituenten 6-30 C-Atome, vorzugsweise 6-20 C-Atome aufweist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A: gleich CH₂, 0 oder NH, vorzugsweise O, ist,
- m: gleich Null oder 1, und
- R^{δ}: ein heterocyclischer Rest wie ein Pyrimidinylrest oder ein Triazinylrest ist.

Bevorzugt sind Phenylsulfonylharnstoffe der Formel (III) und/oder deren Salze, 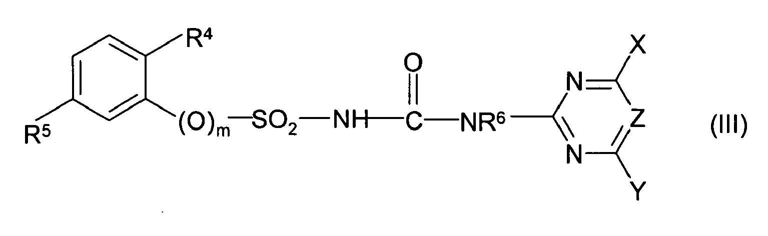 worin
- R⁴: C₁-C₄-Alkoxy, vorzugsweise C₂-C₄-Alkoxy, oder CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
- R⁵: Halogen, vorzugsweise Iod, oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acylrest wie Formyl oder C₁-C₄-Alkyl-Sulfonyl ist, und R⁵ für den Fall, dass R⁴ gleich C₁-C₄-Alkoxy, vorzugsweise C₂-C₄-Alkoxy, bedeutet auch H sein kann,
- R⁶: H oder C₁-C₄-Alkyl ist,
- m: gleich Null oder 1 ist,
- X und Y: unabhängig voneinander gleich oder verschieden Halogen oder NR'R", worin R' und R" gleich oder verschieden H oder C₁-C₄-Alkyl sind, oder C₁-C₆-Alkyl, C₁-C₆-Alkoxy, C₁-C₆-Alkylthio, C₃-C₆-Cycloalkyl, C₂-C₆-Alkenyl, C₂-C₆-Alkynyl, C₃-C₆-Alkenyloxy oder C₃-C₆-Alkynyloxy sind, wobei jeder der acht letztgenannten Reste unsubstituiert oder durch einen oder mehrere Reste aus der Gruppe Halogen, C₁-C₄-Alkoxy und C₁-C₄-Alkylthio substituiert ist, vorzugsweise C₁-C₄-Alkyl oder C₁-C₄-Alkoxy, und
- Z: gleich CH oder N ist.

Besonders bevorzugt sind Phenylsulfonylharnstoffe der allgemeinen Formel (III) und/oder deren Salze, worin
a) R⁴ gleich CO-(C₁-C₄-Alkoxy) ist, R⁵ gleich Halogen, vorzugsweise Jod ist, oder R⁵ gleich CH₂-NHR^{e} ist, worin R^{e} ein Acylrest, vorzugsweise C₁-C₄-Alkyl-Sulfonyl ist, und m gleich Null ist,
b) R⁴ gleich CO-N(C₁-C₄-Alkyl)₂, R⁵ gleich NHR^{e} ist, worin R^{e} ein Acylrest, vorzugsweise Formyl ist, und m gleich Null ist, oder
c) R⁴ gleich C₂-C₄-Alkoxy, R⁵ gleich H und m gleich 1 ist.

Typische Phenylsulfonylharnstoffe sind unter anderem die nachfolgend aufgeführten Verbindungen und deren Salze wie die Natriumsalze: Bensulfuron-methyl, Chlorimuron-ethyl, Chlorsulfuron, Cinosulfuron, Cyclosulfamuron, Ethametsulfuron-methyl, Ethoxysulfuron und dessen Natriumsalz, Metsulfuron-methyl, Oxasulfuron, Primisulfuron-methyl, Prosulfuron, Sulfometuron-methyl, Triasulfuron, Tribenuron-methyl, Triflusulfuron-methyl, Tritosulfuron, lodosulfuron-methyl und dessen Natriumsalz (WO-A-92/13845), Mesosulfuron-methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Publications Ltd. 1999)).

Besonders bevorzugte Phenylsulfonamide sind: lodosulfuron-methyl und dessen Natriumsalz, Mesosulfuron-methyl und dessen Natriumsalz, Foramsulfuron und dessen Natriumsalz, Flucarbazone und dessen Natriumsalz, Propoxycarbazone und dessen Natriumsalz, Methyl-4-[(4,5-dihydro-3-methoxy-4-methyl-5-oxo-1H-1,2,4-triazol-1-yl)carboxamidosulfonyl]-5-metylthiophen-3-carboxylat und dessen Natriumsalz, und Ethoxysulfuron und dessen Natriumsalz, Metsulfuron-methyl und dessen Natriumsalz, Tribenuron-methyl und dessen Natriumsalz, Chlorsulfuron und dessen Natriumsalz.

Als Heteroarylsulfonamide kommen beispielsweise Verbindungen aus der Gruppe der Heteroarylsulfonylaminocarbonyltriazolinone oder der Heteroarylsulfonylharnstoffe, bevorzugt aus der Gruppe der Heteroarylsulfonylharnstoffe in Frage. Unter dem Begriff Heteroarylsulfonylharnstoffe werden auch solche Sulfonylharnstoffe verstanden, bei denen die Heteroarylgruppe über einen Spacer wie CH₂, O oder NH an die Sulfongruppe (SO₂) gebunden ist.

Als Heteroarylsulfonamide kommen beispielsweise Sulfonamide der allgemeinen Formel (IV) und/oder deren Salze in Frage, 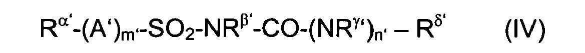 worin
- R^{α'}: ein Heteroarylrest ist, der unsubstituiert oder substituiert ist, und wobei der Heteroarylrest inklusive Substituenten 1-30 C-Atome, vorzugsweise 1-20 C-Atome aufweist,
- R^{β}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A': gleich CH₂, O oder NH, vorzugsweise O, ist,
- m': gleich Null oder 1,
- n': gleich Null oder 1, vorzugsweise gleich 1, und
- R^{δ}': ein heterocyclischer Rest wie ein Pyrimidinylrest, ein Triazinylrest oder ein Triazolinonrest ist.

Bevorzugte Heteroarylsulfonamide sind Heteroarylsulfonylharnstoffe, beispielsweise Sulfonylharnstoffe der allgemeinen-Formel (V) und/oder deren Salze, 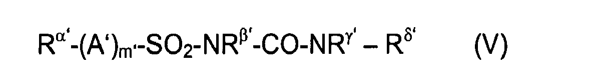 worin
- R^{α}': ein Heteroarylrest ist, der unsubstituiert oder substituiert ist, und wobei der Heteroarylrest inklusive Substituenten 1-30 C-Atome, vorzugsweise 1-20 C-Atome aufweist,
- R^{β}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A': gleich CH₂, O oder NH, vorzugsweise O, ist,
- m': gleich Null oder 1, und
- R^{δ}': ein heterocyclischer Rest wie ein Pyrimidinylrest oder ein Triazinylrest ist.

Besonders bevorzugt sind Heteroarylsulfonamide der nachfolgend genannten Formel (VI), 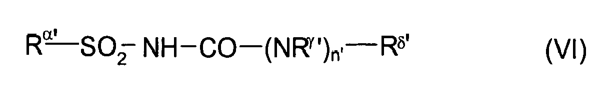 worin
- R^{α}': ein substituierter Heteroarylrest, wie substituiertes Pyridyl, Thienyl, Pyrazolyl oder Imidazolyl,
- R^{γ}': H, (C₁-C₃)Alkyl, optional substituiert mit Halogen (F, C, Br, I) oder (Halo)Alkoxy (C₁-C₃), bevorzugt H oder Methyl,
- für n': gleich 1, R^{δ}' ein Pyrimidinylrest oder ein Triazinylrest ist, vorzugsweise 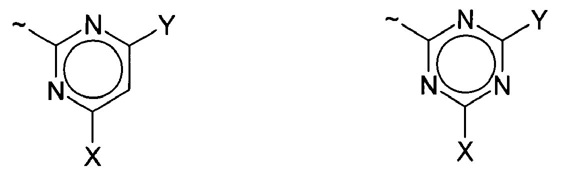
und für n' gleich Null, R^{δ}' ein Triazolinonrest ist, vorzugsweise 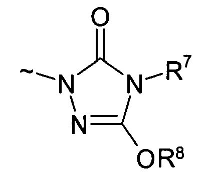
- R⁷: (C₁-C₁₀)Alkyl, welches optional substituiert ist mit Halogen (F, Cl, Br, I) oder (C₁-C₃)Halo-Alkyl,
- R⁸: (C₁-C₁₀)Alkyl, welches optional substituiert ist mit Halogen (F, Cl, Br, I) oder (C₁-C₃)Halo-Alkyl,
- X und Y: unabhängig voneinander gleich oder verschieden Halogen oder NR'R", worin R' und R" gleich oder verschieden H oder C₁-C₄-Alkyl sind, oder C₁-C₆-Alkyl, C₁-C₆-Alkoxy, C₁-C₆-Alkylthio, C₃-C₆-Cycloalkyl, C₂-C₆-Alkenyl, C₂-C₆-Alkynyl, C₃-C₆-Alkenyloxy oder C₃-C₆-Alkynyloxy sind, wobei jeder der acht letztgenannten Reste unsubstituiert oder durch einen oder mehrere Reste aus der Gruppe Halogen, C₁-C₄-Alkoxy und C₁-C₄-Alkylthio substituiert ist, vorzugsweise C₁-C₄-Alkyl oder C₁-C₄-Alkoxy.

Besonders bevorzugt ist R^{α}' gleich 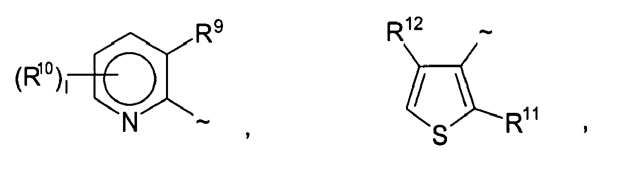 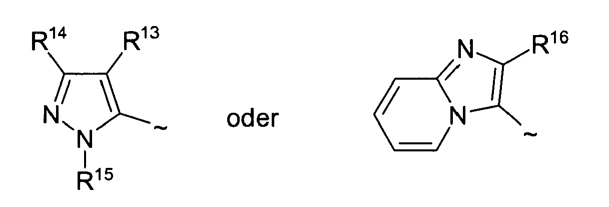 , worin
- R⁹: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, CONR'R", (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl,
- R¹⁰: H, (C₁-C₃)Alkyl, (C₁-C₃)Alkoxy, (C₁-C₃)Halo-Alkyl, (C₁-C₃)Halo-Alkoxy oder Halogen (F, Cl, Br, I),
- I: Null oder 1,
- R¹¹: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl, CONR'R",

- R¹²: Halogen (F, Cl, Br, I), (C₁-C₆)Alkyl, (C₁-C₆)Alkoxy, (C₁-C₆)Alkylsulfonyl, (C₁-C₆)Alkoxycarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₁-C₆)Halo-Alkylsulfonyl, (C₁-C₆)Halo-Alkoxycarbonyl, (C₂-C₆)Halo-Alkenyloxycarbonyl, (C₂-C₆)Halo-Alkinyloxycarbonyl,
- R¹³: (C₁-C₆)Alkoxycarbonyl, (C₂-C₆)Alkenyloxycarbonyl, (C₂-C₆)Alkinyloxycarbonyl, (C₁-C₆)Alkyl, (C₁-C₆)Alkoxy, (C₁-C₆)Alkylsulfonyl, (C₁-C₆)Halo-Alkoxycarbonyl, (C₂-C₆)Halo-Alkenyloxycarbonyl, (C₂-C₆)Halo-Alkinyloxycarbonyl, (C₁-C₆)Halo-Alkyl, (C₁-C₆)Halo-Alkoxy, (C₁-C₆)Halo-Alkylsulfonyl, Halogen (F, Cl, Br, I), CONR'R", oder R¹³ ist ein heterocyclischer Ring der gesättigt, ungesättigt oder aromatisch sein kann und vorzugsweise 4-6-Ringatome und eines oder mehrere Heteroatome aus der Gruppe N, O, S enthält, und optional durch einen oder mehrere Substituenten, vorzugsweise aus der Gruppe (C₁-C₃)Alkyl, (C₁-C₃)Alkoxy, (C₁-C₃)Halo-Alkyl, (C₁-C₃)Halo-Alkoxy oder Halogen substituiert sein kann, besonders bevorzugt

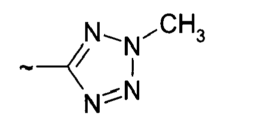

- R¹⁴: H, Halogen (F, C, Br, I), (C₁-C₆)Alkyl, (C₁-C₆)Halo-Alkyl,
- R¹⁵: H, (C₁-C₆)Alkyl, (C₁-C₆)Halo-Alkyl,
- R¹⁶: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl, CONR'R", insbesondere SO₂Ethyl, und
- R' und R": unabhängig voneinander H, (C₁-C₆)Alkyl, (C₁-C₆)Haloalkyl, (C₂-C₆)Alkenyl, (C₂-C₆)Haloalkenyl, (C₂-C₆)Alkinyl, (C₂-C₆)Haloalkinyl sind, oder NR'R" bildet einen heterocyclischen Ring der gesättigt, ungesättigt oder aromatisch sein kann und vorzugsweise 4-6-Ringatome und eines oder mehrere Heteroatome aus der Gruppe N, O, S enthält, und optional durch einen oder mehrere Substituenten, vorzugsweise aus der Gruppe (C₁-C₃)Alkyl, (C₁-C₃)Alkoxy, (C₁-C₃)Halo-Alkyl, (C₁-C₃)Halo-Alkoxy oder Halogen substituiert sein kann.

Besonders bevorzugte Heteroarylsulfonylharnstoffe sind z.B. Nicosulfuron und dessen Salze wie das Natriumsalz, Rimsulfuron und dessen Salze wie das Natriumsalz, Thifensulfuron-methyl und dessen Salze wie das Natriumsalz, Pyrazosulfuron-ethyl und dessen Salze wie das Natriumsalz, Flupyrsulfuron-methyl und dessen Salze wie das Natriumsalz, Sulfosulfuron und dessen Salze wie das Natriumsalz, Trifloxysulfuron und dessen Salze wie das Natriumsalz, Azimsulfuron und dessen Salze wie das Natriumsalz, Flazasulfuron und dessen Salze wie das Natriumsalz und Flucetosulfuron (1-[3-[[[[(4,6-dimethoxy-2-pyrimidinyl)amino]carbonyl]amino]sulfonyl]-2-pyridinyl]-2-fluoropropyl methoxyacetat) und dessen Salze wie das Natriumsalz.

Unter dem Begriff Sulfonamiden werden im Sinne der vorliegenden Erfindung stets sämtliche Anwendungsformen wie Säuren, Ester, Salze und Isomere wie Stereoisomere und optische Isomere verstanden. So sind neben den neutralen Verbindungen stets auch deren Salze mit anorganischen und/oder organischen Gegenionen zu verstehen. So können Sulfonamide z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃. Bevorzugte Ester sind die Alkylester, insbesondere die C₁-C₁₀-Alkylester wie Methylester.

Soweit in der oben genannten Beschreibung der Begriff Acylrest verwendet wird, bedeutet dieser den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierten Carbaminsäuren, Sulfonsäuren, Sulfinsäuren, Phosphonsäuren, Phosphinsäuren. Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SO₂R^{z}, wobei R^{z} jeweils einen C₁-C₁₀-Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, 1, Alkoxy, Haloalkoxy, Hydroxy, Amino, Nitro, Cyano oder Alkylthio, oder R^{z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl. Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁-C₄(Alkylsulfinyl), N-Alkyl-1-iminoalkyl, wie N-(C₁-C₄)-1-imino-(C₁-C₄)alkyl und andere Reste von organischen Säuren. Ein Kohlenwasserstoffrest bedeutet ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl. Aryl bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl. Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Triazolyl, Dioxolanyl, Morpholinyl, Tetrahydrofuryl. Bevorzugt sind Pyrimidinyl und Triazinyl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten. Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor. Gegebenenfalls substituiertes Phenyl ist vorzugsweise Phenyl, das unsubstituiert oder ein- oder mehrfach, vorzugsweise bis zu dreifach durch gleiche oder verschiedene Reste, vorzugsweise aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyl, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl. Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl. Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl. Halogen bedeutet beispielsweise Fluor, Chlor, Brom oder Iod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Ganz besonders bevorzugt von den Wirkstoffen aus der Gruppe der Sulfonamide und deren Salze sind Propoxycarbazone und dessen Natriumsalz (Propoxycarbazon-methyl-natrium), Methyl-4-[(4,5-dihydro-3-methoxy-4-methyl-5-oxo-1H-1,2,4-triazol-1-yl)carboxamidosulfonyl]-5-metylthiophen-3-carboxylat und dessen Natriumsalz, Amidosulfuron und dessen Natriumsalz (Amidosulfuron-methyl-natrium), lodosulfuron-methyl und dessen Natriumsalz (lodosulfuron-methyl-natrium), Foramsulfuron und dessen Natriumsalz, Thifensulfuron-methyl und dessen Natriumsalz sowie Mesosulfuron-methyl und dessen Natriumsalz.

Die agrochemischen Wirkstoffe können auch Wachstumsregulatoren sein. Beispiele hierfür sind Cyclanilide, Ethephon, Tribufos und Thidiazuron.

Unter den in den erfindungsgemäß genannten Wirkstoffen sind im Sinne der vorliegenden Erfindung neben den neutralen Verbindungen stets auch deren Salze mit anorganischen und/oder organischen Gegenionen zu verstehen. So können beispielsweise Sulfonylharnstoffe z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃. Ein Beispiel hierfür wäre lodosulfuron-methyl-sodium (synonym lodosulfuron-methyl-Natrium).

Die vorstehend aufgeführten Herbizide (Verbindungen aus der Gruppe der Sulfonamide, Pflanzenwuchsregulatoren) sind z.B. bekannt aus "The Pesticide Manual", 12. Auflage (2000), 13. Auflage (2003) und 14. Auflage (2006), The British Crop Protection Council oder aus den nach den einzelnen Wirkstoffen aufgeführten Literaturstellen.

Bevorzugt sind Herbizide, wie Vertreter aus der Gruppe der oben definierten "Sulfonamide", vorzugsweise z.B. blattaktive Herbizide wie ALS-Inhibitoren (z.B. Sulfonamide wie Thiencarbazone(-methyl), Flucarbazone, Propoxycarbazone oder Amicarbazone oder Sulfonylharnstoffe wie Mesosulfuron, lodosulfuron-methyl(-sodium), Ethoxysulfuron, Amidosulfuron, Foramsulfuron), Diflufenican, Herbizide aus der Klasse der Benzoylcyclohexandione wie Tembotrione, Bromoxynilhaltige oder loxynilhaltige Produkte, Herbizide aus der Klasse der Aryloxy-Phenoxypropionate wie Fenoxaprop-P-ethyl, Herbizide aus der Klasse der Oxyacetamide (z.B. Flufenacet und Mefenacet), Herbizide aus der Klasse der Triazolopyrimidinsulfonamid-Derivate (z.B. Flumetsulam, Metosulam), Zuckerrübenherbizide wie Desmedipham, Phenmedipham, Ethofumesate oder Metamitron, Wirkstoffe aus der Klasse der HPPD-Inhibitoren (z.B. Isoxaflutole, Sulcotrione, Mesotrione) oder auch Wirkstoffe aus der Gruppe der phosphorhaltigen Herbizide oder deren Derivate wie Salze, wie z.B. Glufosinate und dessen Ammoniumsalz in racemischer Form, d.h. 2-Amino-4-[hydroxy(methyl)phosphinoyl]-butansäure bzw. dessen Ammoniumsalz, das L-Enantiomer von Glufosinate und dessen Ammoniumsalz, Bilanafos/Bialaphos, d.h. L-2-Amino-4-[hydroxy(methyl)phosphinoyl]-butanoyl-L-alaninyl-L-alanin und dessen Natriumsalz, sowie Glyphosate.

### Safener

Die agrochemischen Wirkstoffe können auch Safener sein. Beispiele hierfür sind
a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (S1-1) ("Mefenpyr-diethyl", PM), und verwandte Verbindungen, wie sie in der WO 91/07874 beschrieben sind:
b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester(S1-5) und verwandte Verbindungen, wie sie in EP-A-333 131 und EP-A-269 806 beschrieben sind;
c) Verbindungen vom Typ der Triazolcarbonsäuren, vorzugsweise Verbindungen wie Fenchlorazol-ethyl(ester), d.h. 1-(2,4-Dichlorphenyl)-5-trichlormethyl-(1 H)-1,2,4-triazol-3-carbonsäureethylester (S1-6), und verwandte Verbindungen (EP-A-174 562 und EP-A-346 620);
d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9) ("Isoxadifen-ethyl") oder -n-propylester (S1-10) oder der 5-(4-Fluorphenyl)-5-phenyl-2-isoxazolin-3-carbonsäureethylester (S1-11), wie sie in der Patentanmeldung mit der Veröffentlichungsnummer WO-A-95/07897 beschrieben sind;
e) Verbindungen vom Typ der 8-Chinolinoxyessigsäure (S2), vorzugsweise (5-Chlor-8-chinolinoxy)-essigsäure-(1-methyl-hex-1-yl)-ester (Common name "Cloquintocet-mexyl" (S2-1) (siehe PM) (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind;
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind;
g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba);
h) Wirkstoffe vom Typ der Pyrimidine, die als bodenwirksame Safener in Reis angewendet werden, wie z. B. "Fenclorim" (PM) (= 4,6-Dichlor-2-phenylpyrimidin), das als Safener für Pretilachlor in gesätem Reis bekannt ist;
i) Wirkstoffe vom Typ der Dichloracetamide, die häufig als Vorauflaufsafener (bodenwirksame Safener) angewendet werden, wie z. B.
   "Dichlormid" (PM) (= N,N-Diallyl-2,2-dichloracetamid), "R-29148" (= 3-Dichloracetyl-2,2,5-trimethyl-1,3-oxazolidin von der Firma Stauffer),
   "Benoxacor" (PM) (= 4-Dichloracetyl-3,4-dihydro-3-methyl-2H-1,4-benzoxazin).
   "PPG-1292" (= N-Allyl-N-[(1,3-dioxolan-2-yl)-methyl]-dichloracetamid von der Firma PPG Industries),
   "DK-24" (= N-Allyl-N-[(allylaminocarbonyl)-methyl]-dichloracetamid von der Firma Sagro-Chem),
   "AD-67" oder "MON 4660" (= 3-Dichloracetyl-1-oxa-3-aza-spiro[4,5]decan von der Firma Nitrokemia bzw. Monsanto),
   "Diclonon" oder "BAS145138" oder "LAB145138" (= 3-Dichloracetyl-2,5,5-trimethyl-1,3-diazabicyclo[4.3.0]nonan von der Firma BASF) und "Furilazol" oder "MON 13900" (siehe PM) (= (RS)-3-Dichloracetyl-5-(2-furyl)-2,2-dimethyloxazolidin);
j) Wirkstoffe vom Typ der Dichloracetonderivate, wie z. B.
   "MG 191" (CAS-Reg. Nr. 96420-72-3) (= 2-Dichlormethyl-2-methyl-1,3-dioxolan von der Firma Nitrokemia), das als Safener für Mais bekannt ist;
k) Wirkstoffe vom Typ der Oxyimino-Verbindungen, die als Saatbeizmittel bekannt sind, wie z. B.
   "Oxabetrinil" (PM) (= (Z)-1,3-Dioxolan-2-ylmethoxyimino(phenyl)acetonitril), das als Saatbeiz-Safener für Hirse gegen Schäden von Metolachlor bekannt ist;
   "Fluxofenim" (PM) (= 1-(4-Chlorphenyl)-2,2,2-trifluor-1-ethanon-O-(1,3-dioxolan-2-ylmethyl)-oxim, das als Saatbeiz-Safener für Hirse gegen Schäden von Metolachlor bekannt ist, und
   "Cyometrinil" oder "CGA-43089" (PM) (= (Z)-
   Cyanomethoxyimino(phenyl)acetonitril), das als Saatbeiz-Safener für Hirse gegen Schäden von Metolachlor bekannt ist;
l) Wirkstoffe vom Typ der Thiazolcarbonsäureester, die als Saatbeizmittel bekannt sind, wie z. B.
   "Flurazol" (PM) (= 2-Chlor-4-trifluormethyl-1,3-thiazol-5-carbonsäurebenzylester), das als Saatbeiz-Safener für Hirse gegen Schäden von Alachlor und Metolachlor bekannt ist;
m) Wirkstoffe vom Typ der Naphthalindicarbonsäurederivate, die als Saatbeizmittel bekannt sind, wie z. B.
   "Naphthalic anhydrid" (PM) (= 1,8-Naphthalindicarbonsäureanhydrid), das als Saatbeiz-Safener für Mais gegen Schäden von Thiocarbamatherbiziden bekannt ist,
n) Wirkstoffe vom Typ Chromanessigsäurederivate, wie z. B.
   "CL 304415" (CAS-Reg. Nr. 31541-57-8) (= 2-(4-Carboxy-chroman-4-yl)-essigsäure von der Firma American Cyanamid), das als Safener für Mais gegen Schäden von Imidazolinonen bekannt ist;
o) Wirkstoffe, die neben einer herbiziden Wirkung gegen Schadpflanzen auch Safenerwirkung an Kulturpflanzen wie Reis aufweisen, wie z. B. "Dimepiperate" oder "MY-93" (PM) (= Piperidin-1-thiocarbonsäure-S-1-methyl-1-phenylethylester), das als Safener für Reis gegen Schäden des Herbizids Molinate bekannt ist;
   "Daimuron" oder "SK 23" (PM) (= 1-(1-Methyl-1-phenylethyl)-3-p-tolyl-harnstoff), das als Safener für Reis gegen Schäden des Herbizids Imazosulfuron bekannt ist,
   "Cumyluron" = "JC-940" (= 3-(2-Chlorphenylmethyl)-1-(1-methyl-1-phenylethyl)-harnstoff, siehe JP-A-60087254), das als Safener für Reis gegen Schäden einiger Herbizide bekannt ist,
   "Methoxyphenon" oder "NK 049" (= 3,3'-Dimethyl-4-methoxy-benzophenon), das als Safener für Reis gegen Schäden einiger Herbizide bekannt ist, "CSB" (= 1-Brom-4-(chlormethylsulfonyl)-benzol) (CAS-Reg. Nr. 54091-06-4 von Kumiai), das als Safener gegen Schäden einiger Herbizide in Reis bekannt ist,
p) N-Acylsulfonamide der Formel (S3) und ihre Salze, 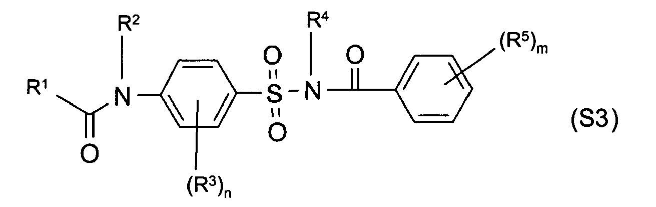 wie sie in WO-A-97/45016 beschrieben sind,
q) Verbindungen vom Typ der Acylsulfamoylbenzoesäureamide der nachfolgenden Formel (S4), die z.B. bekannt sind aus WO-A-99/16744, 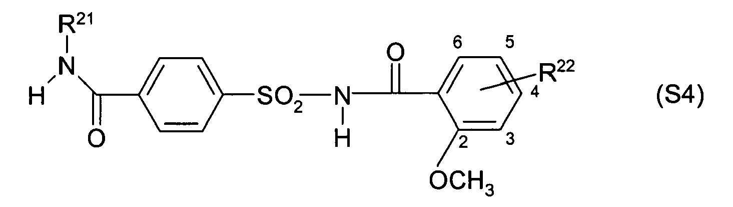 worin
   R21 = Cyclo-Propyl und R22 = H ist (4-Cyclopropylaminocarbonyl-N-(2-methoxybenzoyl)benzolsulfonamid; "Cyprosulfamide");
   R21 = Cyclo-Propyl und R22 = 5-Cl ist,
   R21 = Ethyl und R22 = H ist,
   R21 = iso-Propyl und R22 = 5-Cl ist und
   R21 = iso-Propyl und R22 = H ist (4-iso-propylaminocarbonyl-N-(2-methoxybenzoyl)benzolsulfonamid);
r) Verbindungen der Formel (S5), 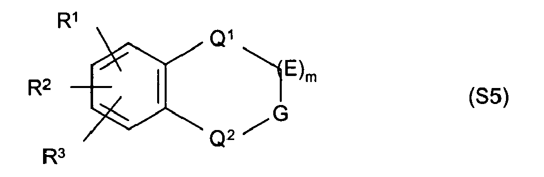 wie sie in der WO-A 98/13 361 beschrieben sind, einschließlich der Stereoisomeren und den in der Landwirtschaft gebräuchlichen Salzen.

Die vorstehend aufgeführten Safener sind z.B. bekannt aus "The Pesticide Manual", 12. Auflage (2000), 13. Auflage (2003) und 14. Auflage (2006), The British Crop Protection Council oder aus den nach den einzelnen Wirkstoffen aufgeführten Literaturstellen.

Bevorzugt sind Safener wie Mefenpyr-diethyl, Cloquintocet-mexyl, Isoxadifen-ethyl, Cyprosulfamide (4-Cyclopropylaminocarbonyl-N-(2-methoxybenzoyl)benzolsulfonamid), 4-iso-propylaminocarbonyl-N-(2-methoxybenzoyl)benzolsulfonamid oder Fenchlorazol-ethyl.

Von besonderer Bedeutung sind auch Mischungen von Herbiziden und Safenern. Die Gewichtsverhältnisse von Herbizid(mischung) zu Safener hängt im Allgemeinen von der Aufwandmenge an Herbizid und der Wirksamkeit des jeweiligen Safeners ab und kann innerhalb weiter Grenzen variieren, beispielsweise im Bereich von 200:1 bis 1:200, vorzugsweise 100:1 bis 1:100, insbesondere 20:1 bis 1:20.

### Fungizide

Die agrochemischen Wirkstoffe können auch Fungizide sein, beispielsweise

Inhibitoren der Nucleinsäure Synthese, insbesondere
Benalaxyl, Benalaxyl-M, Bupirimat, Chiralaxyl, Clozylacon, Dimethirimol, Ethirimol, Furalaxyl, Hymexazol, Metalaxyl, Metalaxyl-M, Ofurace, Oxadixyl, Oxolinsäure

Inhibitoren der Mitose und Zellteilung, insbesondere
Benomyl, Carbendazim, Diethofencarb, Fuberidazole, Pencycuron, Thiabendazol, Thiophanat-methyl, Zoxamid

Inhibitoren der Atmungskette Komplex I, insbesondere
Diflumetorim

Inhibitoren der Atmungskette Komplex II insbesondere
Boscalid, Carboxin, Fenfuram, Flutolanil, Furametpyr, Mepronil, Oxycarboxin, Penthiopyrad, Thifluzamid

Inhibitoren der Atmungskette Komplex III, insbesondere
Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin, Trifloxystrobin

Entkoppler, insbesondere
Dinocap, Fluazinam

Inhibitoren der ATP Produktion, insbesondere
Fentinacetat, Fentinchlorid, Fentinhydroxid, Silthiofam

Inhibitoren der Aminosäure- und Proteinbiosynthese, insbesondere
Andoprim, Blasticidin-S, Cyprodinil, Kasugamycin, Kasugamycinhydrochlorid Hydrat, Mepanipyrim, Pyrimethanil

Inhibitoren der Signal-Transduktion, insbesondere
Fenpiclonil, Fludioxonil, Quinoxyfen

Inhibitoren der Fett- und Membran Synthese, insbesondere
Chlozolinat, Iprodion, Procymidon, Vinclozolin
Ampropylfos, Kalium-Ampropylfos, Edifenphos, Iprobenfos (IBP), Isoprothiolan,
Pyrazophos
Tolclofos-methyl, Biphenyl
lodocarb, Propamocarb, Propamocarb hydrochlorid

Inhibitoren der Ergosterol Biosynthese, insbesondere
Fenhexamid,
Azaconazol, Bitertanol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Metconazol, Myclobutanil, Paclobutrazol, Penconazol, Propiconazol, Prothioconazol, Simeconazol, Tebuconazol, Tetraconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol, Aldimorph, Dodemorph, Dodemorphacetat, Fenpropimorph, Tridemorph, Fenpropidin, Spiroxamin,
Naftifin, Pyributicarb, Terbinafin

Inhibitoren der Zellwand Synthese, insbesondere
Benthiavalicarb, Bialaphos, Dimethomorph, Flumorph, Iprovalicarb, Polyoxins, Polyoxorim, Validamycin A

Inhibitoren der Melanin Biosynthese, insbesondere
Capropamid, Diclocymet, Fenoxanil, Phtalid, Pyroquilon, Tricyclazol

Resistenzinduktoren, insbesondere
Acibenzolar-S-methyl, Probenazol, Tiadinil

Multisite, insbesondere
Captafol, Captan, Chlorothalonil, Kupfersalze wie: Kupferhydroxid, Kupfernaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram

Fungizide mit unbekannten Mechanismus, insbesondere
Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ethaboxam, Ferimzon, flumetover, Flusulfamid, Fluopicolid, Fluoroimid, Hexachlorobenzol, 8-Hydroxychinolinsulfat, Irumamycin, Methasulphocarb, Metrafenon, Methyl Isothiocyanat, Mildiomycin, Natamycin, Nickel dimethyldithiocarbamat, Nitrothal-isopropyl, Octhilinon, Oxamocarb, Oxyfenthiin, Pentachlorophenol und Salze, 2-Phenylphenol und Salze, Piperalin, Propanosin -Natrium, Proquinazid, Pyrrolnitrin, Quintozen, Tecloftalam, Tecnazen, Triazoxid, Trichlamid, Zarilamid und 2,3,5,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1H-inden-4-yl)-3-pyridincarboxamid, 3-[5-(4-Chlorphenyl)-2,3-dimethylisoxazolidin-3-yl]pyridin, cis-1-(4-Chlorphenyl)-2-(1H-1,2,4-triazol-1-yl)-cycloheptanol, 2,4-Dihydro-5-methoxy-2-methyl-4-[[[[1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2,2-dimethyl-1 H-inden-1-yl)-1 H-imidazole-5-carboxylat, 3,4,5-Trichlor-2,6-pyridindicarbonitril, Methyl 2-[[[cyclopropyl[(4-methoxyphenyl) imino]methyl]thio]methyl]-.alpha.-(methoxymethylen)- benzacetat, 4-Chlor-alpha-propinyloxy-N-[2-[3-methoxy-4-(2-propinyloxy)phenyl]ethyl]-benzacetamide, (2S)-N-[2-[4-[[3-(4-chlorophenyl)-2-propinyl]oxy]-3-methoxyphenyl]ethyl]- 3-methyl-2-[(methylsulfonyl)amino]-butanamid, 5-Chlor-7-(4-methylpiperidin-1-yl)-6-(2,4,6-trifluorophenyl)[1,2,4]triazolo[1,5-a]pyrimidin, 5-Chlor-6-(2,4,6-trifluorophenyl)-N-[(1 R)-1,2,2-trimethylpropyl][1,2,4]triazolo[1,5-a]pyrimidin-7-amin, 5-Chlor-N-[(1 R)-1,2-dimethylpropyl]-6-(2,4,6-trifluorophenyl) [1,2,4]triazolo[1,5-a]pyrimidin-7-amine, N-[1-(5-Brom-3-chloropyridin-2-yl)ethyl]-2,4-dichloronicotinamid, N-(5-Brom-3-chlorpyridin-2-yl)methyl-2,4-dichlornicotinamid, 2-Butoxy-6-iod-3-propyl-benzopyranon-4-on, N-{(Z)-[(cyclopropylmethoxy)imino][6-(difluormethoxy)-2,3-difluorphenyl]methyl}-2-benzacetamid, N-(3-Ethyl-3,5,5-trimethyl-cyclohexyl)-3-formylamino-2-hydroxy-benzamid, 2-[[[[1-[3(1 Fluor-2-phenylethyl)oxy] phenyl] ethyliden]amino]oxy]methyl]-alpha-(methoxyimino)-N-methyl-alphaE-benzacetamid, N-{2-[3-Chlor-5-(trifluormethyl)pyridin-2-yl]ethyl}-2-(trifluoromethyl)benzamid, N-(3',4'-dichlor-5-fluorbiphenyl-2-yl)-3-(difluormethyl)-1-methyl-1H-pyrazol-4-carboxamid, N-(6-Methoxy-3-pyridinyl)-cyclopropan carboxamid, 1-[(4-Methoxyphenoxy)methyl]-2,2-dimethylpropyl-1H-imidazol-1-carbonsäure, O-[1-[(4-Methoxyphenoxy)methyl]-2,2-dimethylpropyl]-1H-imidazol- 1- carbothioic acid, 2-(2-{[6-(3-Chlor-2-methylphenoxy)-5-fluorpyrimidin-4-yl]oxy}phenyl)-2-(methoxyimino)-N-methylacetamid

Die agrochemischen Wirkstoffe können auch Bakterizide sein, beispielsweise Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Die vorstehend aufgeführten Fungizide (Bakterizide) sind z.B. bekannt aus "The Pesticide Manual", 12. Auflage (2000), 13. Auflage (2003) und 14. Auflage (2006), The British Crop Protection Council oder aus den nach den einzelnen Wirkstoffen aufgeführten Literaturstellen.

Bevorzugt sind Fungizide, wie Bitertanol, Bromuconazol, Carbendazim, Carproamid, Cyproconazole, Edifenphos, Fenanidone, Fenhexamid, Fentins, Fluquinconazole, Fosetyl Aluminium, Iprodione, Iprovalicarb, Pencycuron, Prochloraz, Propamocarb HCl, Propineb, Pyrimethanil, Spiroxamine, Tebuconazole, Tolylfluanid-Dichlofluanid, Triadimefon, Triadimenol, Trifloxystrobin.

### Insektizide

Die agrochemischen Wirkstoffe können auch Insektizide / Akarizide und/oder Nematizide sein, beispielsweise

Acetylcholinesterase (AChE) Inhibitoren
Carbamate,
zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metamsodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate Organophosphate,
zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, lodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion

Natrium-Kanal-Modulatoren / Spannungsabhängige Natrium-Kanal-Blocker Pyrethroide,
zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda- Cyhalothrin, Metofluthrin, Permethrin (cis-, trans-), Phenothrin (1 R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1 R- isomer), Tralomethrin, Transfluthrin, ZXI 8901, Pyrethrins (pyrethrum)
DDT
Oxadiazine,
zum Beispiel Indoxacarb
Semicarbazon,
zum Beispiel Metaflumizon (BAS3201)

Acetylcholin-Rezeptor-Agonisten/-Antagonisten
Chloronicotinyle,
zum Beispiel Acetamiprid, Clothianidin, Dinotefuran, Imidacloprid, Nitenpyram, Nithiazine, Thiacloprid, Thiamethoxam
Nicotine, Bensultap, Cartap

Acetylcholin-Rezeptor-Modulatoren
Spinosyne,
zum Beispiel Spinosad

GABA-gesteuerte Chlorid-Kanal-Antagonisten
Organochlorine,
zum Beispiel Camphechlor, Chlordane, Endosulfan, Gamma-HCH, HCH,
Heptachlor, Lindane, Methoxychlor
Fiprole,
zum Beispiel Acetoprole, Ethiprole, Fipronil, Pyrafluprole, Pyriprole,
Vaniliprole

Chlorid-Kanal-Aktivatoren
Mectine,
zum Beispiel Abamectin, Emamectin, Emamectin-benzoate, Ivermectin,
Lepimectin, Milbemycin

Juvenilhormon-Mimetika,
zum Beispiel Diofenolan, Epofenonane, Fenoxycarb, Hydroprene, Kinoprene, Methoprene, Pyriproxifen, Triprene

Ecdysonagonisten/disruptoren
Diacylhydrazine,
zum Beispiel Chromafenozide, Halofenozide, Methoxyfenozide, Tebufenozide

Inhibitoren der Chitinbiosynthese
Benzoylharnstoffe,
zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron
Buprofezin
Cyromazine

Inhibitoren der oxidativen Phosphorylierung, ATP-Disruptoren
Diafenthiuron
Organozinnverbindungen,
zum Beispiel Azocyclotin, Cyhexatin, Fenbutatin-oxide

Entkoppler der oxidativen Phoshorylierung durch Unterbrechung des H-Protongradienten
Pyrrole,
zum Beispiel Chlorfenapyr
Dinitrophenole,
zum Beispiel Binapacyrl, Dinobuton, Dinocap, DNOC

Site-I-Elektronentransportinhibitoren
METI's,
zum Beispiel Fenazaquin, Fenpyroximate, Pyrimidifen, Pyridaben, Tebufenpyrad, Tolfenpyrad
Hydramethylnon
Dicofol

Site-II-Elektronentransportinhibitoren
Rotenone

Site-III-Elektronentransportinhibitoren
Acequinocyl, Fluacrypyrim

Mikrobielle Disruptoren der Insektendarmmembran
Bacillus thuringiensis-Stämme

Inhibitoren der Fettsynthese
Tetronsäuren,
zum Beispiel Spirodiclofen, Spiromesifen
Tetramsäuren,
zum Beispiel Spirotetramat
Carboxamide,
zum Beispiel Flonicamid
Oktopaminerge Agonisten,
zum Beispiel Amitraz

Inhibitoren der Magnesium-stimulierten ATPase,
Propargite
Nereistoxin-Analoge,
zum Beispiel Thiocyclam hydrogen oxalate, Thiosultap-sodium

Agonisten des Ryanodin-Rezeptors,
Benzoesäuredicarboxamide,
zum Beispiel Flubendiamid
Anthranilamide,
zum Beispiel DPX E2Y45 (3-bromo-N-{4-chloro-2-methyl-6-[(methylamino)carbonyl]phenyl}-1-(3-chloropyridin-2-yl)-1H-pyrazole-5-carboxamide)

Biologika, Hormone oder Pheromone
Azadirachtin, Bacillus spec., Beauveria spec., Codlemone, Metarrhizium spec., Paecilomyces spec., Thuringiensin, Verticillium spec.

Wirkstoffe mit unbekannten oder nicht spezifischen Wirkmechanismen
Fraßhemmer,
zum Beispiel Cryolite, Flonicamid, Pymetrozine
Milbenwachstumsinhibitoren,
zum Beispiel Clofentezine, Etoxazole, Hexythiazox
Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin.

Die vorstehend aufgeführten Insektizide (Akarizide, Nematizide) sind z.B. bekannt aus "The Pesticide Manual", 12. Auflage (2000), 13. Auflage (2003) und 14. Auflage (2006), The British Crop Protection Council oder aus den nach den einzelnen Wirkstoffen aufgeführten Literaturstellen.

Bevorzugt sind Insektizide, wie Acetamiprid, Acrinathrin, Aldicarb, Amitraz, Azinphos-methyl, Beta-Cyfluthrin, Carbaryl, Cyfluthrin, Cypermethrin, Deltamethrin, Endosulfan, Ethoprophos, Fenamiphos, Fenthion, Imidacloprid, Methamidophos, Methiocarb, Niclosamide, Oxydemeton-methyl, Phosalone, Prothiophos, Silafuofen, Thiacloprid, Thiodicarb, Tralomethrin, Triazophos, Trichlorfon, Triflumuron; ganz besonders bevorzugt aus der Gruppe Chloronicotinyle wie Acetamiprid, Clothianidin, Dinotefuran, Imidacloprid, Nitenpyram, Nithiazine, Thiacloprid, Thiamethoxam.

Besonders bevorzugte agrochemische Wirkstoffe sind Vertreter aus der Gruppe der oben definierten "Sulfonamide", vorzugsweise Thiencarbazone(-methyl), Flucarbazone, Propoxycarbazone, Amicarbazone, Mesosulfuron, lodosulfuron-methyl(-sodium), Ethoxysulfuron, Amidosulfuron, Foramsulfuron, sowie Tembotrione, Isoxaflutole, Diflufenican, Flufenacet, Cyprosulfamide, Mefenpyr-diethyl, Cloquintocet-mexyl, Isoxadifen-ethyl, Tebuconazole, Fluquinconazole, Imidacloprid und Thiacloprid.

Die Schädlingsbekämpfungsmittel enthalten in der Regel 0,01 bis 90 Gew.-%, bevorzugt 0,1 bis 80 Gew.-%, besonders bevorzugt 5 bis 60 Gew.-%, der (agrochemischen) Wirkstoffe aus der Gruppe der Herbizide, Safener, Insektizide und Fungizide. Die flächenbezogenen Aufwandmengen der (agrochemischen) Wirkstoffe aus der Gruppe der Herbizide, Safener, Insektizide und Fungizide liegen im allgemeinen zwischen 1 und 2000 g AS/ha (AS = Aktivsubstanz, d. h. Aufwandmenge bezogen auf den aktiven Wirkstoff), bevorzugt zwischen 2 und 1000 g AS/ha.

Erfindungsgemäß wird das mengenmäßige Verhältnis von mindestens einem stabilen Isotopenpaar in einer untersuchten Probe gemessen und mit dem einer Referenzprobe verglichen, um die Identität der beiden Proben zu ermitteln.

Isotope sind Nuklide gleicher Kernladungszahl, aber unterschiedlicher Anzahl der im Kern vorhandenen Neutronen; d.h. sie gehören zu demselben chemischen Element, haben aber unterschiedliche Massezahlen.

Das erfindungsgemäße Verfahren kann mit allen Elementen durchgeführt werden, die mindestens zwei stabile Isotope bilden, wie Kohlenstoff und Stickstoff.

Bevorzugt sind Wasserstoff: 1 H und 2H (Deuterium); Kohlenstoff: 12C und 13C; Stickstoff: 14N und 15N; Sauerstoff: 160 und 170 und 180; Schwefel: 32S, 33S, 34S und 36S; Chlor: 35Cl und 37Cl; Brom: 79Br und 81 Br, besonders bevorzugt ist Kohlenstoff: 12C und 13C und Wasserstoff: 1 H und 2H, ganz besonders bevorzugt ist Kohlenstoff: 12C und 13C.

In einer Ausführungsform der Erfindung enthält das Pflanzenschutzmittel keine isotopenmarkierten Zusätze. In diesem Fall wird lediglich für mindestens ein stabiles Isotopenpaar das Verhältnis bestimmt.

Die Bestimmung kann dabei für das gesamte Pflanzenschutzmittel oder für ein oder mehrere einzelne Bestandteile erfolgen. Bevorzugt ist die Bestimmung für ein oder mehrere Bestandteile. Dazu wird das Pflanzenschutzmittel vorzugsweise aufgetrennt, beispielsweise durch chromatographische Methoden, wie Flüssig- oder Gaschromatographie.

Erfindungsgemäß wird bei dieser Ausführungsform der Unterschied in der natürlichen Isotopenverteilung bei Produkten aus verschiedener Herstellung, die z.B. aus unterschiedlichen Rohstoffen produziert wurden, bestimmt.

In einer bevorzugten Variante dieser Ausführungsform wird das Isotopenverhältnis eines bestimmten Isotopenpaares, z.B. 12C/13C bestimmt, bevorzugt für mindestens eine Wirkstoffkomponente und mindestens einen Formulierungshilfsstoff, beispielsweise ein Tensid.

In einer weiteren bevorzugten Variante dieser Ausführungsform wird das Isotopenverhältnis mindestens zweier verschiedener lsotopenpaare bestimmt. Dies kann für eine bestimmte oder aber für verschiedene Komponenten des Pflanzenschutzmittels geschehen, wobei ersteres bevorzugt ist.

In einer besonders bevorzugten Ausführungsform der Erfindung wird das Isotopenverhältnis eines oder mehrerer Isotopenpaare, von mindestens drei (3) Komponenten des zu untersuchenden Pflanzenschutzmittels bestimmt, so dass sich ein Muster (ein sogenannter Fingerabdruck oder "finger print") ergibt, das mit dem entsprechenden Muster der Referenzprobe verglichen werden kann. Damit erhöht sich die Sicherheit der Nachweismethode beträchtlich.

Bevorzugt ist es dabei, ein Muster für das Isotopenverhältnis eines Isotopenpaares zu erstellen. Dabei ist es bevorzugt, das Isotopenverhältnis an mindestens drei Komponenten des Pflanzenschutzmittels zu bestimmen.

Es ist aber auch möglich, das lsotopenverhältnis für mehrere der gewählten Atome in einer chemischen Verbindung zu bestimmen, wenn sich diese z.B. in einer chemisch unterschiedlichen Umgebung befinden (NMR-Spektroskopie) oder verschiedenen Bruchstücken der Verbindung (Massenspektrometrie) angehören.

Weiterhin bevorzugt ist es, ein Muster für das lsotopenverhältnis unterschiedlicher Isotopenpaare zu bestimmen. Je nach vorhandenen Komponenten in dem zu untersuchenden Pflanzenschutzmittel, kann diese Bestimmung an einer oder mehrerer Komponenten durchgeführt werden.

In einer weiteren Ausführungsform der Erfindung enthält das Pflanzenschutzmittel eine lsotopenmarkierung. Isotopenmarkierung im Sinne der Erfindung bedeutet, dass das Pflanzenschutzmittel mindestens eine Komponente enthält, bei der das Verhältnis mindestens eines stabilen Isotopenpaares deutlich, d.h. um mindestens 20 %, vorzugsweise mindestens 50 %, besonders bevorzugt mindestens 75 % gegenüber dem mittleren natürlichen Verhältnis verändert ist.

In einer Variante dieser Ausführungsform handelt es sich bei der isotopenmarkierten Komponente um eine gewöhnlich in dem Pflanzenschutzmittel vorhandene, in einer zweiten Variante um eine zusätzliche, zum Zwecke der Markierung zugesetzte.

Bei der ersten Variante kann die lsotopenmarkierung im Falle von Pflanzenschutzmitteln beispielsweise in einem Wirkstoff und/oder in einem Formulierungshilfsmittel, zum Beispiel einem Tensid, enthalten sein.

Dabei kann die entsprechende Komponente vollständig oder teilweise isotopenmarkiert sein.

Bevorzugt für eine Markierung sind die Isotopen 13C, 2H, 180 und 34S, besonders bevorzugt sind 13C und 2H, insbesondere 13C.

Bei der zweiten Variante werden dem Pflanzenschutzmittel zusätzlich, insbesondere isotopenmarkierte, Stoffe als Markierungsstoffe zugesetzt. Geeignet sind dabei Stoffe, bei denen eine lsotopenmarkierung einfach unter ökonomischen Gesichtspunkten möglich ist. Die Markierungsstoffe müssen zudem in dem zu markierenden Pflanzenschutzmittel löslich oder suspendierbar sein. Geeignet sind beispielsweise Aminosäuren und Carbonate.

Die Herstellung isotopenmarkierter Verbindungen ist bekannt und in allgemeiner Form beispielsweise in Murray III, A. and Williams, D.L., Organic Synthesis with Isotopes, Vols I and II, Interscience, New York (1958) beschrieben. Beispiele für eine Markierung mit 13C finden sich beispielsweise in Ji, R. ; Schäffer, A.: Synthesis of 13C- and 14C-labelled catechol in: Journal of labelled compounds & radiopharmaceuticals 45 (2002), S.551-558.

Die Messung beispielsweise des 13C Isotopes kann mit verschiedenen analytischen Techniken sehr empfindlich durchgeführt werden. Insbesondere kommen dabei NMR Methoden (Synthesis, 13C NMR, and biological evaluation of cis- and trans-4-amino-3'-arylspiro[cyclohexane-1,1'(3'H)-isobenzofuran] derivatives
J Med Chem. 1981 May;24(5):617-21), massenspektroskopische Methoden wie LC-MS, GC-MS und GC-Verbrennungs Isotop Ratio MS (GCC-IRMS, Wolyniak CJ, Sacks GL,Metzger SK, Brenna JT.: Determination of Intramolecular delta13C from incomplete pyrolysis fragments. Evaluation of pyrolysis-induced isotopic fractionation in fragments from the lactic acid analogue propylene glycol; Anal Chem. 2006 Apr 15;78(8):2752-7), letztere auch im continous-flow Modus, GC mit gekoppelter Analytik über Atomemission, laser-basierte photoakkustische Spektrometer sowie Infrarotspektrometer zum Einsatz. Diese Messungen sind auch mit mehreren 13C Markierungen in einem Molekül möglich (Brainard et all.: 13C NMR evidence for gamma-aminobutyric acid formation via pyruvate carboxylase in rat brain: a metabolic basis for compartmentation.
J. Neurochem. 53, 1285-1292) wie auch für die Kombination verschiedener 13C markierter Substanzen.

Ein weiterer Gegenstand der Erfindung ist ein Pflanzenschutzmittel, enthaltend mehrere Komponenten, wobei mindestens zwei dieser Komponenten eine Isotopenmarkierung aufweisen.

In einer weiteren bevorzugten Ausführungsform handelt es sich bei dem erfindungsgemäßen Pflanzenschutzmittel um eine pharmazeutische Zubereitung oder ein Pflanzenmittel, wobei die eine isotopenmarkierte Komponente ein Wirkstoffmolekül und eine andere isotopenmarkierte Komponente ein Formulierungshilfsstoff, insbesondere ein Tensid ist.

Bevorzugt sind Wirkstoff und Formulierungshilfsstoff mit demselben Isotop markiert.

Ebenso bevorzugt sind Wirkstoff und Formulierungshilfsstoff mit verschiedenen Isotopen markiert.

Bei den Wirkstoffen handelt es sich vorzugsweise um die oben beschriebenen.

Bei den Formulierungshilfsstoffen handelt es sich bevorzugt um Tenside.

Beispiele für Tenside sind nachfolgend aufgeführt, worin EO=Ethylenoxid-Einheiten, PO=Propylenoxid-Einheiten und BO=Butylenoxid-Einheiten bedeutet:
b1) C₁₀-C₂₄-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Die terminalen Hydroxygruppen dieser Verbindungen können durch einen Alkyl-, Cycloalkyl-oder Acylrest mit 1-24 Kohlenstoffatomen endgruppen verschlossen sein. Beispiele für derartige Verbindungen sind:
   Genapol^{®}C-, L-, O-, T-, UD-, UDD-, X-Produkte von Clariant, Plurafac^{®}- und Lutensol^{®}A-, AT-, ON-, TO-Produkte von BASF, Marlipal^{®}24- und 013 Produkte von Condea, Dehypon^{®}-Produkte von Henkel, Ethylan^{®}-Produkte von Akzo-Nobel, wie Ethylan CD 120.
b2) Anionische Derivate der unter b1) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis), wie Genapol^{®}LRO, Sandopan^{®}-Produkte und Hostaphat/Hordaphos^{®}-Produkte von Clariant.
   Copolymere bestehend aus EO, PO und/oder BO Einheiten, zum Beispiel Blockcopolymere, wie die Pluronic^{®}-Produkte von BASF und die Synperonic^{®}-Produkte von Uniquema mit einem Molekulargewicht von 400 bis 10⁸. Alkylenoxydaddukte von C₁ - C₉ Alkoholen wie Atlox^{®}5000 von Uniquema oder Hoe^{®}-S3510 von Clariant.
b3) Fettsäure- und Triglyceridalkoxylate, wie die Serdox^{®}NOG-Produkte von Condea oder alkoxylierte Pflanzenöle, wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, wobei unter den Pflanzenölen auch deren Umesterungsprodukte verstanden werden, z.B. Alkylester, wie Rapsölmethylester oder Rapsölethylester, beispielsweise die Emulsogen^{®}-Produkte von Clariant, Salze von aliphatischen,cycloaliphatischen und olefinischen Carbonsäuren und Polycarbonsäuren, sowie Alpha-Sulfofettsäureester, wie z.B. von der Firma Henkel erhältlich.
b4) Fettsäureamidalkoxylate, wie die Comperlan^{®}-Produkte von Henkel oder die Amam^{®}-Produkte von Rhodia.
   Alkylenoxydaddukte von Alkindiolen, wie die Surfynol^{®}-Produkte von Air Products. Zuckerderivate, wie Amino- und Amidozucker von Clariant, Glukitole von Clariant, Alkylpolyglycoside in Form der APG^{®}-Produkte von Henkel oder wie Sorbitanester in Form der Span^{®}- oder Tween^{®}-Produkte von Uniquema oder Cyclodextrinester oder -ether von Wacker.
b5) Oberflächenaktive Cellulose- und Algin-, Pektin- und Guarderivate, wie die Tylose^{®}-Produkte von Clariant, die Manutex^{®}-Produkte von Kelco und Guarderivate von Cesalpina.
   Alkylenoxydaddukte auf Polyolbasis wie Polyglykol^{®}-Produkte von Clariant. Grenzflächenaktive Polyglyceride und deren Derivate von Clariant.
b6) Sulfosuccinate , Alkansulfonate, Paraffin- und Olefinsulfonate, wie Netzer IS^{®}, Hoe^{®}S1728, Hostapur^{®}OS, Hostapur^{®}SAS von Clariant, Triton^{®}GR7ME und GR5 von Union Carbide, Empimin^{®}-Produkte von Albright und Wilson, Marlon^{®}-PS65 von Condea.
b7) Sulfosuccinamate, wie die Aerosol^{®}-Produkte von Cytec oder die Empimin^{®}-Produkte von Albright und Wilson.
b8) Alkylenoxidaddukte von Fettaminen, quartäre Ammonium-Verbindungen mit 8 bis 22 Kohlenstoffatomen (C₈-C₂₂), wie die Genamin^{®}C,L,O,T-Produkte von Clariant.
b9) Oberflächenaktive, zwitterionische Verbindungen, wie Tauride (z.B. N-Alkyltauride), Betaine und Sulfobetaine in Form von Tegotain^{®}-Produkte von Goldschmidt, Hostapon^{®}T- und Arkopon^{®}T-Produkte von Clariant.
b10) Oberflächenaktive Verbindungen auf Silikon- bzw. Silanbasis, wie die Tegopren^{®}-Produkte von Goldschmidt und die SE^{®}-Produkte von Wacker, sowie die Bevaloid^{®}- ,Rhodorsil^{®}- und Silcolapse^{®}-Produkte von Rhodia (Dow Corning, Reliance, GE, Bayer).
b11) Per- oder polyfluorierte oberflächenaktive Verbindungen, wie Fluowet^{®}-Produkte von Clariant, die Bayowet^{®}-Produkte von Bayer, die Zonyl^{®}-Produkte von DuPont und Produkte dieser Art von Daikin und Asahi Glass.
b12) Grenzflächenaktive Sulfonamide z.B. von Bayer.
b13) Grenzflächenaktive Polyacryl- und Polymethacrylderivate, wie die Sokalan^{®}-Produkte von BASF.
b14) Oberflächenaktive Polyamide, wie modifizierte Gelatine oder derivatisierte Polyasparginsäure von Bayer und deren Derivate.
b15) Tensidische Polyvinylverbindungen, z.B. modifiziertes Polyvinylpyrollidon, wie die Luviskol^{®}-Produkte von BASF und die Agrimer^{®}-Produkte von ISP oder die derivatisierten Polyvinylacetate wie die Mowilith^{®}-Produkte von Clariant oder die -butyrate, wie die Lutonal^{®}-Produkte von BASF, die Vinnapas^{®}- und die Pioloform^{®}-Produkte von Wacker oder modifizierten Polyvinylalkohole, wie die Mowiol^{®}-Produkte von Clariant.
b16) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere, wie die Agrimer^{®}-VEMA-Produkte von ISP.
b17) Oberfächenaktive Derivate von Montan-, Polyethylen-, und Polypropylenwachsen wie die Hoechst^{®}-wachse oder die Licowet^{®}-Produkte von Clariant.
b18) Oberflächenaktive Phosphonate und Phosphinate, wie Fluowet^{®}-PL von Clariant.
b19) Poly- oder perhalogenierte Tenside, wie Emulsogen^{®}-1557 von Clariant.
b20) Phenole, die alkoxyliert sein können, beispielsweise Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 1 bis 4 C-Atome aufweist, vorzugsweise mit 3 bis 10 mol Alkylenoxid umgesetztes Phenol, (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol, Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol.
b21) Verbindungen, die formal die Umsetzungsprodukte der unter b20) beschriebenen Moleküle mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol.
b22) Aromatische Sulfonate wie Naphthalinsulfonate (z.B. Alkylnaphthalinsulfonate wie Monoalkyl- oder Dialkylnaphthalinsulfonate) oder Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öllösliche Salze, beispielsweise das Calciumsalz oder das Isopropylammoniumsalz der Dodecylbenzolsulfonsäure.

Bei den Alkylenoxyeinheiten sind Ethylenoxy-, Propylenoxy- und Butylenoxyeinheiten, insbesondere Ethylenoxyeinheiten bevorzugt.

Die Erfindung wird durch ein Beispiel näher erläutert ohne jedoch darauf beschränkt zu sein.

### Beispiel:

### 1. Erläuterungen

SC = Suspensionskonzentrat
a.i. = Aktivsubstanz = Wirkstoff
% = Gewichtsprozent

### 2. Nicht markierte SC 120-Formulierung

SC 120-Formulierung eines Wirkstoffes C₁₉H₂₁ClN₆O mit folgender Zusammensetzung:
- 11,3%a.i.
- 60 % Additive/Lösungsmittel
- 5 % Harnstoff
- Wasser

Kohlenstoffgehalt der Einzelkomponenten:
- a.i.: 59,3%
- Additive/Lösungsmittel: 70 %
- Harnstoff: 20 %

Daraus resultiert ein Kohlenstoffgehalt der SC 120-Formulierung von 49.7 %. Da Kohlenstoff aus einem Isotopengemisch mit 1,1 % C13-Kohlenstoff besteht, enthält die (nicht markierte) SC 120-Formulierung 5,470 g C13/L.

### 3. Markierte SC 120-Formulierung

0,1 ‰ des Harnstoffes wird ersetzt durch C13-Harnstoff (hier: 5 mg C13-Harnstoff/L).

Diese Zugabe erhöht den Anteil an C13 in der Formulierung um 1,065 mg auf 5,471g C13/L.

Dieser Unterschied kann mit einem modernen hochauflösenden Massenspektrometer bestimmt werden.

## Patentansprüche

1. Verfahren zur Identifizierung eines Pflanzenschutzmittels, wobei
a) man bei einer Referenzprobe eines ersten Pflanzenschutzmittels mindestens ein relatives Verhältnis zwischen zwei stabilen Isotopen eines chemischen Elements bestimmt,
b) man bei einer zweiten Probe eines Pflanzenschutzmittels, dessen Identität mit dem ersten Produkt untersucht werden soll, das gleiche relative Verhältnis zwischen zwei stabilen Isotopen eines chemischen Elements wie in Schritt (a) bestimmt, und
c) man durch Vergleich der in Schritt (a) und (b) ermittelten Werte Identität oder Nichtidentität der beiden Erzeugnisse feststellt.

2. Verfahren gemäß Anspruch 1, wobei es sich bei dem Pflanzenschutzmittel um eine Wirkstoffzusammensetzung handelt.

3. Verfahren gemäß Anspruch 2, wobei der Wirkstoff ein Herbizid, Insektizid, Fungizid, Safener oder Wachstumsregulator ist.

4. Verfahren gemäß einem oder mehreren der Ansprüche 1 bis 3, wobei die zwei stabilen Isotope aus der Gruppe 12C/13C, 1 H/2H, 14N/15N, 160/170, 32S/33S, 34S/36S, 35Cl/37Cl und 79Br/81 Br gewählt sind.

5. Verfahren gemäß einem oder mehreren der Ansprüche 1 bis 4, wobei die Bestimmung des Isotopenverhältnisses durch NMR oder Massenspektrometrie erfolgt.

6. Verfahren gemäß einem oder mehreren der Ansprüche 1 bis 5, wobei die Bestimmung für mehrere Komponenten des Pflanzenschutzmittels durchgeführt wird.

7. Verfahren gemäß einem oder mehreren der Ansprüche 1 bis 6, wobei die Bestimmung für mehrere Isotopenpaare durchgeführt wird.

8. Verfahren gemäß einem oder mehreren der Ansprüche 1 bis 7, wobei das Erzeugnis eine oder mehrere Isotopenmarkierungen enthält.

9. Pflanzenschutzmittel, insbesondere eine pharmazeutische Zubereitung oder ein Pflanzenschutzmittel, enthaltend mehrere Komponenten, wobei mindestens zwei dieser Komponenten eine Isotopenmarkierung aufweisen.

10. Pflanzenschutzmittel gemäß Anspruch 9, wobei eine der isotopenmarkierten Komponenten ein Wirkstoff und eine ein Formulierungshilfsstoff ist.
